# EUROPÄISCHE PATENTSCHRIFT

(11) **EP 2 655 855 B1**
(45) Veröffentlichungstag und Bekanntmachung des Hinweises auf die Patenterteilung: **22.10.2014**
(21) Anmeldenummer: 11796722.4
(22) Anmeldetag: 19.12.2011
(51) Int. Cl.: F02M 63/00, F02M 55/02, F16K 15/02, F16K 27/02, F02M 63/02

(54) **DRUCKBEGRENZUNGSVENTIL MIT KOLBEN VARIABLEN QUERSCHNITTS EINES HOCHDRUCKSPEICHERS FÜR EIN EINSPRITZSYSTEM**
PRESSURE RELIEF VALVE COMPRISING A PISTON HAVING A VARIABLE CROSS-SECTION OF A HIGH-PRESSURE ACCUMULATOR FOR AN INJECTION SYSTEM
LIMITEUR DE PRESSION POURVU D'UN PISTON DE SECTION VARIABLE POUR ACCUMULATEUR HAUTE PRESSION D'UN SYSTÈME D'INJECTION

(30) Priorität: 20.12.2010 FR 1004985
(43) Veröffentlichungstag der Anmeldung: 30.10.2013
(73) Patentinhaber: Robert Bosch GmbH, 70442 Stuttgart (DE)
(72) Erfinder: ROSSIGNOL, Francois, F-69440 Mornant (FR); ROUSSE, André, F-69200 Venissieux (FR); JULIEN, Jean-Roch, F-69960 Corbas (FR)
(86) Internationale Anmeldenummer: PCT/EP2011/073184
(87) Internationale Veröffentlichungsnummer: WO 2012/084778

(56) Entgegenhaltungen:
- EP-A2- 1 219 828
- DE-A1- 10 223 025
- DE-A1-102007 019 076
- DE-A1-102008 013 096
- FR-A1- 2 828 529
- US-A- 3 801 233
- US-A1- 2009 283 157

## Beschreibung

### Gebiet der Erfindung

Die Erfindung bezieht sich auf ein Druckbegrenzungsventil für einen Hochdruckspeicher eines Kraftstoffeinspritzsystems für Verbrennungsmotoren, beinhaltend:

Ein Gehäuse mit einem Druckregelungsdurchlass, der mit einem von einer geeichten Feder beaufschlagten Kolben versehen ist und zwischen dem mit dem Hochdruckspeicher verbundenen Ventileinlass und dem Rücklaufauslass zum Kraftstoffbehälter angeordnet ist, wobei sich der Kolben zum Kraftstoffbehälter dann öffnet, wenn der Druck im Speicher den Solldruck übersteigt, auf den das Druckbegrenzungsventil eingestellt ist.

### Stand der Technik

FR 2 828 529 A1 und DE 102 23 025 A1 offenbaren ein Druckbegrenzungsventil eines Hochdruckspeichers mit einem ersten und dritten kreiszylindrischen Teil, verbunden durch einen stumpfzylindrischen Teil, wobei der Kraftstoff direkt seitlich stromabwärts des Ventilsitzes abströmt. Die FR 2 828 529 A1 offenbart eine separate Ventilkugel, während bei der DE 102 23 025 A1 ein kegeliger Ventilsitz Teil des Ventilkolbens ist.

Die Hochdruckeinspritzsysteme mit Common Rail (oder Kraftstoffhochdruckspeicher) verfügen über einen Hochdruckregler oder ein Druckbegrenzungssicherheitsventil, das sich bei Überdruck im Hochdruckspeicher öffnet.
Dieser Druckregler ist ein Magnetventil, das auf Grund der Druckdifferenz zwischen dem von einem am Common Rail angebrachten Sensor erfassten tatsächlichen Druck und einem Solldruck (oder Grenzdruck) gesteuert wird. Das Druckbegrenzungsventil ist ein mechanisch gesteuertes Ventil mit einer tarierten Feder, die einen Grenzdruck definiert, bei dem sich das Ventil öffnet, wenn der Speicherdruck diesen Grenzdruck zu übersteigen beginnt oder übersteigt. Das Sicherheitsventil ist mit der Kraftstoffrückflussleitung zum Kraftstoffbehälter verbunden, so dass der durch das Sicherheitsventil geförderte Kraftstoff zurückgewonnen werden kann.

Man kennt bereits ein solches Druckbegrenzungsventil, bestehend aus einem zweiteiligen Gehäuse mit einem zylindrischen eine tarierte Feder aufnehmenden Körper, der von einem in dem Körper verstemmten Kopf verschlossen wird. Der Kopf enthält einen Druckregelungsdurchlass, der von einem mit einem Sitz zusammenwirkenden Kolben verschlossenen wird, wobei der Sitz einen Dichtsitz bildet. Der Kolben wird von der tarierten Feder beaufschlagt. Dieses Druckbegrenzungsventil öffnet sich, wenn der in dem Common Rail herrschende Druck den Solldruck übersteigt.

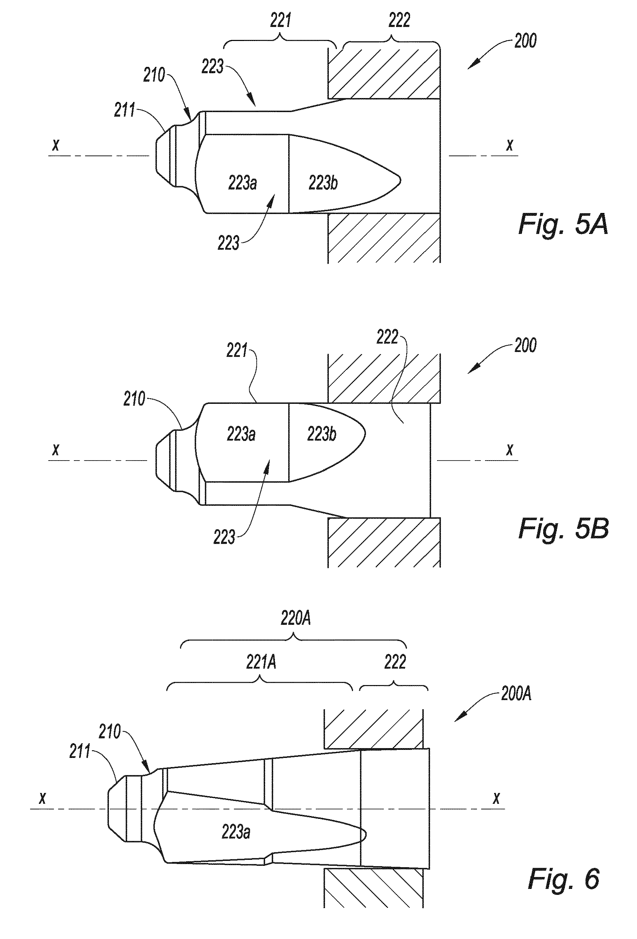

Um besser die Merkmale des Standes der Technik hervorzuheben, werden weiter unten anhand der Fig. 5A, 5B und 6 zwei bekannte mit verschiedenen Kolben bestückte Druckbegrenzungsventile nacheinander beschrieben. Diese Kolben werden teilweise mit der Druckregelungsdurchlassbohrung dargestellt, in der diese Kolben aufgenommen sind.

Die Fig. 5A und 5B zeigen eine bekannte Ausführung gemäß zwei verschiedenen Ausrichtungen um die Achse xx der Kolbens.

Der bekannte Kolben 200 besteht aus einem Kopf 210 mit einer konischen Fläche 211, die mit dem konischen Sitz des Druckregelungsdurchlasses des Ventils zusammenwirken soll. Der Kopf geht auf der der Feder zugewandten Seite in einen zylindrischen Körper 220 über, der aus einem Vorderteil 221 und einem Hinterteil 222 besteht. Der zylindrische Hinterteil hat den Durchmesser der den Kolben 200 aufnehmenden Druckregelungsdurchlassbohrung. Der Vorderteil 221 des Körpers 220 weist Abflachungen 223 auf, die für die Flüssigkeit Durchlässe zwischen der Bohrung und dem Kolben bilden, wenn das Druckbegrenzungsventil offen ist.

Der Kolben 200 weist drei gleichwinkelig um die Symmetrieachse xx verteile Abflachungen, und jede Abflachung 223 besteht aus einem vorderen Segment 223a und einem hinteren Segment 223b. Der stromaufwärtige Teil 223a hat eine im Wesentlichen rechteckige Form, und der stromabwärtige Teil 223b, der aufsteigt und sich an den hinteren Führungsteil 222 anschließt, hat eine krummlinig dreieckige Form.

Konkret entsprechen die beiden Segmente 223a, 223b der Abflachung 223 dem Schnitt der zylindrischen Hülle des Körpers 220 durch jeweils eine zur Achse xx parallele und eine zur Achse xx geneigte Ebene.

Eine zweite bekannte in Fig. 6 dargestellte Ausführungsform des Kolbens 200A weist eine der ersten bekannten Ausführung ziemlich ähnliche Form auf. Der Kolben besteht aus einem Kopf 210 mit einer konischen Fläche 211, die mit der konischen Fläche des Druckregelungsdurchlasses zusammenwirkt, und aus einem global zylinderförmigen Körper 220 mit einem Vorderteil 221A und einem Hinterteil 222. Der Hinterteil 222 ist zylindrisch mit einem für die Führung des Kolbens der Druckregelungsdurchlassbohrung angepassten Durchmesser. Der Vorderteil 221A ist zylindrisch, aber von Facetten 223a stumpf geschnitten, die sich durch den Schnitt der zylindrischen Hülle des Kolbens durch eine zur Achse xx geneigte Ebene ergeben.

Die Abflachungen 223a, drei an der Zahl, sind gleichwinkelig um die Achse xx verteilt.

Allgemein haben die mit solchen Kolben 200, 200A versehenen Druckbegrenzungsventile während der Öffnung des Ventils eine variable freie Querschnittsfläche und die freie Querschnittsfläche begrenzt den Kraftstofffluss, der für die Drucksteuerung über den Kolbenhub abgeführt werden kann.

### Aufgabe der Erfindung

Aufgabe der Erfindung ist es, ein Druckbegrenzungsventil zu entwickeln, mit dem ein optimierter Durchlassquerschnitt realisiert werden kann, um einen größeren während der Druckbegrenzungsphase abzuführenden Kraftstoffdurchfluss bei einem verringerten Nutzhub zu erreichen, wodurch Herstellungskosten reduziert werden können.

### Offenbarung der Erfindung und Vorzüge

Zu diesem Zweck betrifft die Erfindung ein Druckbegrenzungsventil der oben definierten Art, dadurch gekennzeichnet, dass
- der Kolben aus einem eine konische Fläche aufweisenden Kopf, einem kreiszylindrischen Vorderteil, einem stumpfkegeligen Zwischenteil und einem kreiszylindrischen Hinterteil besteht,
   - wobei der Kopf in einen Körper übergeht, der die Form einer kreiszylindrischen Hülle aufweist, welche aus dem Vorderteil, dem Zwischenteil und dem Hinterteil besteht,
   - wobei die kleinere Basis des stumpfkegeligen Zwischenteils nach vorne gerichtet ist, und sich seine größere Basis an das Hinterteil anschließt, und dass
   - das Hinterteil entsprechend dem Querschnitt der für die Druckregelung verwendeten Durchlassbohrung einen kreisförmigen Querschnitt aufweist.

Das erfindungsgemäße Druckbegrenzungsventil bietet im Hochdruckspeicher während der Druckbegrenzungs- und Druckregelungsphasen den Vorteil eines für den aus dem Speicher austretende Kraftstoff optimierten Durchlassquerschnitts. Dank dem optimierten Durchlassquerschnitt arbeitet der Ventilkolben mit einem sehr kurzen Hub. Außerdem ist ein solches Ventil dank der besonderen den Kolben gegebenen Form einfacher und billiger herzustellen, als die bekannten Druckbegrenzungsventile.

Darüber hinaus verringert das erfindungsgemäße Ventil die hydraulischen Instabilitäten und sichert damit eine bessere globale Funktion.

Nach anderen vorteilhaften Merkmalen der Erfindung
- ist der vordere kreiszylindrische Teil von gleichem Querschnitt, wie der hintere kreiszylindrische Teil und der stumpfkegelige Zwischenteil schließt sich durch seine kleinere Basis über eine stumpfkegelige umgekehrt gerichtete Übergangszone an den Vorderteil an, wobei sich die kleinere Basis der Übergangszone an die kleinere Basis des stumpfkegeligen Zwischenteils anschließt, und die größere Basis der Übergangszone sich an den kreiszylindrischen Vorderteil anschließt.
- der Vorderteil und der Zwischenteil werden von zur Kolbenachse xx geneigten Ebenen geschnitten, wodurch global dreieckige Abflachungen gebildet werden, wobei sich die große Basis der Abflachungen vorne und die Spitze hinten befindet.

Diese Kolbenausführung ist besonders vorteilhaft, weil aus einem zylindrische Kolben einfach zu realisieren, der über seine ganze Länge den gleichen kreisförmigen Querschnitt aufweist, an dem ein stumpfkegeliger Teil ausgearbeitet wird, dessen kleinere Basis nach vorne gerichtet ist und sich an den vorderen Teil des Körpers durch einen stumpfkegeligen Übergang geringer Länge anschließt.

Danach werden problemlos auf diesem Rohteil durch Schleifen entlang einer zur Kolbenachse geneigten Ebene die Abflachungen angebracht, wobei die Ebene den Vorderteil und gegebenenfalls den Zwischenteil schneidet, und bis zum Hinterteil reicht. Vorzugsweise weist der Kolben drei gleichwinkelig zu seiner Achse verteilte Abflachungen auf.

Nach einem weiteren vorteilhaften Merkmal weist der vordere kreiszylindrische Teil einen kleineren Querschnitt auf, als der Querschnitt der Druckregelungsdurchlassbohrung, und schließt sich an die kleineren Basis des stumpfkegeligen Zwischenteils an.

Diese Ausführungsform des Kolbens sichert in dem Zwischenraum zwischen der Hüllfläche des Kolbens und der Durchlassbohrung zur Druckregelung ein sehr gleichmäßiges Fließverhalten der Flüssigkeit.

Nach einem weiteren vorteilhaften Merkmal ist der Querschnitt des Hohlraumes, der die Trägerscheibe aufnimmt, auf die sich die tarierte Feder abstützt und die gegen den Kolben drückt, größer als derjenige der Aufnahme für die tarierte Feder.

Durch diese Ausführungsform kann bei Montage und Zusammenbau des Ventils die Trägerscheibe für ihre Positionierung gehalten werden.

Nach einem weiteren vorteilhaften Merkmal mündet der Auslass in die Kammer der tarierten Feder in Höhe von dieser. Diese Lösung hat den Vorteil, zu vermeiden, dass die Trägerscheibe auch nur teilweise den zum Kraftstoffbehälter zurückführenden Flüssigkeitsauslass verschließen kann.

Global verbessert die Erfindung das Fließverhalten um den Kolben, das axial rotationssymmetrisch wird, besonders wenn der Kolben selbst ganz rotationssymmetrisch ist.

Die Erfindung betrifft auch die Kraftstoffhochdruckspeicher von Einspritzsystemen, die mit einem wie oben definierten Druckbegrenzungsventil versehen sind. Schließlich betrifft die Erfindung Einspritzsysteme mit Common Rail, deren Hochdruckspeicher (Common Rail) mit einem Druckbegrenzungsventil wie oben definiert versehen sind.

### Abbildungen

Die Erfindung wird nachfolgend anhand der beigefügten Abbildungen näher beschrieben:
- Fig. 1 zeigt ein sehr vereinfachtes Schema eines mit einem Druckbegrenzungsventil versehenen Hochdruckeinspritzsystems.
- Fig. 2 zeigt einen Schnitt durch ein Druckbegrenzungsventil für einen Kraftstoffhochdruckspeicher.
- Fig. 3A, 3B zeigen eine erste Ausführungsform eines Kolbens für ein erfindungsgemäßes Druckbegrenzungsventil nach Fig. 2:

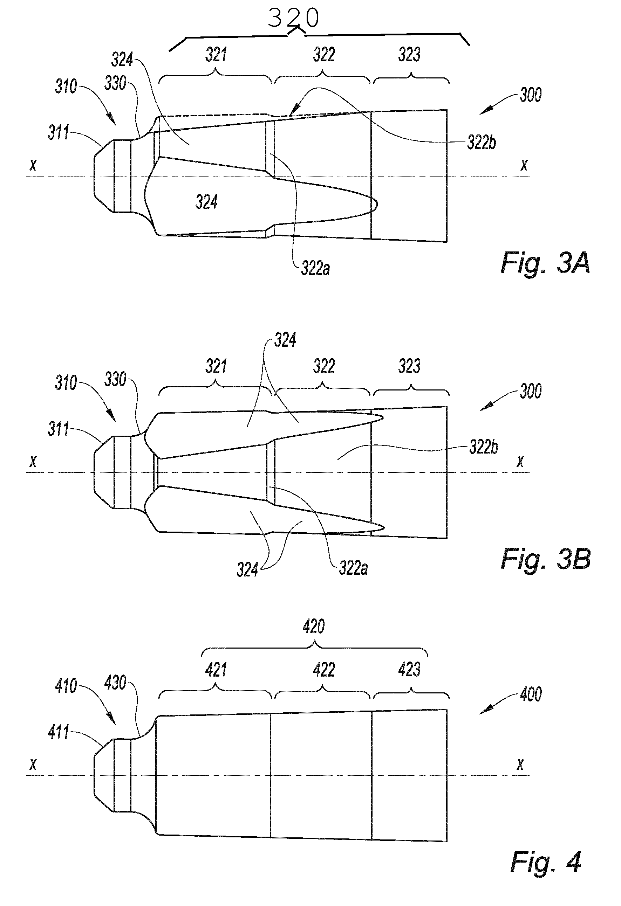

   * Fig. 3A zeigt den fertig bearbeiteten Kolben, dargestellt bei einer ersten Orientierung um seine Achse xx,
   * Fig. 3B zeigt den fertig bearbeiteten Kolben, dargestellt bei einer zweiten Orientierung um seine Achse xx.
- Fig. 4 zeigt eine Seitenansicht einer zweiten Ausführungsform eines erfindungsgemäßen Druckbegrenzungsventils.
- Fig. 5A, 5B zeigen schematisch eine Ausführungsform des Kolbens eines bekannten Druckbegrenzungsventils unter zwei verschiedenen Orientierungen um seine Achse xx.
- Fig. 6 zeigt eine zweite Ausführungsform des Kolbens eines bekannten Druckbegrenzungsventils

### Beschreibung von Ausführungen der Erfindung

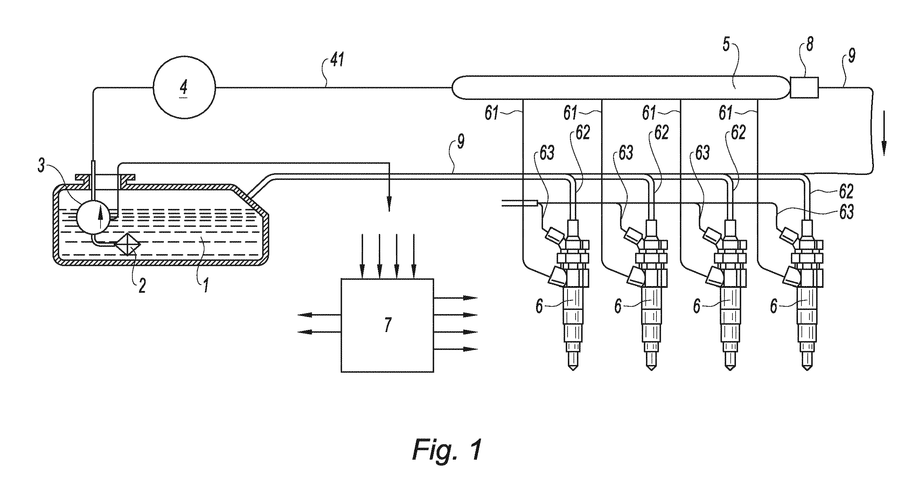

Gemäß Fig. 1 besteht ein sehr vereinfacht dargestelltes Hochdruckeinspritzsystem aus einem über ein Kraftstofffilter 2 mit einer Kraftstoffförderpumpe 3 verbundenen Kraftstoffbehälter 1, wobei die Kraftstoffförderpumpe 3 selbst mit einer Hochdruckpumpe 4 verbunden ist. Die Hochdruckpumpe 4 liefert Kraftstoff unter hohem Druck durch die Leitung 41 an einen Kraftstoffhochdruckspeicher 5, auch Common Rail genannt, der eine Kraftstoffreserve unter hohem Druck bereitstellt, um die jeweils durch einen Kraftstoffzulauf 61 mit dem Kraftstoffhochdruckspeicher 5 verbundenen Einspritzventile 6 zu versorgen. Jedes Einspritzventil 6 verfügt für den zugeführten aber für die Einspritzung nicht verwendeten Kraftstoff über eine zum Kraftstoffbehälter 1 führende Kraftstoffrücklaufleitung 62.

Der Hochdruckkreis ist mit einer Steuerungszentrale 7 verbunden, die Informationen aus verschiedenen Aufnehmern empfängt, wie dem Sensor für den Stand im Kraftstoffbehälter 1, dem Kurbelwellendrehsensor, dem Beschleunigungssensor, einem oder mehreren Temperatursensoren, sowie anderen Sensoren, die für die Motorverwaltung verwendete Signale liefern, um Steuerungssignale für die Kraftstoffförderpumpe 3, die Hochdruckpumpe 4 und die Einspritzventile 6 zu erzeugen. Diese Sensoren sind nicht dargestellt. Die Signale werden von der als Rechteck schematisch dargestellten Steuerungszentrale 7 empfangen, die durch Pfeile schematisch dargestellte Steuerungssignale - insbesondere die Steuerungssignale für die Einspritzventile 6 - über Steuerleitungen 63 aussendet.

Der Kraftstoffhochdruckspeicher 5 verfügt über ein erfindungsgemäßes Druckbegrenzungsventil 8, das dort den Druck auf einen Solldruck begrenzt. Dieses Druckbegrenzungsventil 8 ist durch den Rücklauf 9 mit dem Kraftstoffbehälter 1 verbunden, mit welchem ebenfalls die Kraftstoffrückläufe 62 der Einspritzventile 6 verbunden sind. Bei einem Überdruck in dem Kraftstoffhochdruckspeicher 5 öffnet sich das Ventil, so dass Kraftstoff von dem Speicher zum Kraftstoffbehälter 1 entweichen kann, damit der Druck in dem Speicher bei dem Soll- oder Grenzdruck gehalten wird.

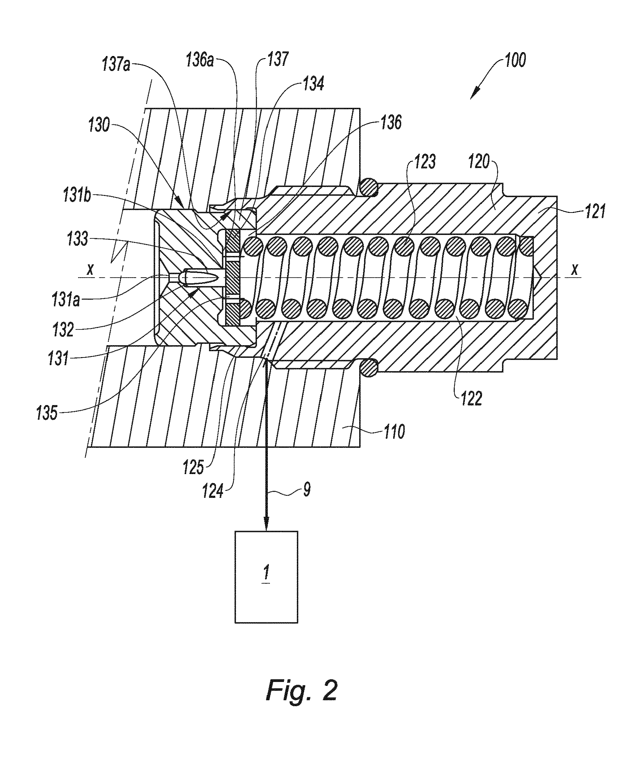

Fig. 2 zeigt einen Schnitt durch eine Ausführungsform eines erfindungsgemäßen Druckbegrenzungsventils, das einen links vom Druckbegrenzungsventil befindlichen Hochdruckspeicher 5 bestückt, wobei hier das Druckbegrenzungsventil zur Vereinfachung seiner detaillierten Beschreibung die Bezugsnummer 100 trägt. Das Ventil 100 weist ein Gehäuse auf, das aus einem zylindrischen durch einen Boden 121 verschlossenen Körper 120 besteht, wodurch eine eine tarierte Feder 123 aufnehmende Kammer 122 entsteht. Der Vorderteil der Kammer 122 wird von einem mit dem Körper 120 verstemmten Kopf 130 verschlossen und von einem Durchlass 131 durchzogen, der zum Zusammenwirken mit einem stiftförmigen Kolben 133 einem Sitz 132 bildet, wobei der Stift von einer von Öffnungen 135 durchlochten und einen Träger ergebenden Scheibe 134 angetrieben wird. Die Scheibe 134 ist in dem Hohlraum 136 aufgenommen, der in dem Kopf 130 ausgebildet ist. Die Feder 123 stützt sich auf den Boden 121 der Kammer des zylindrischen Körper 120 und gegen die Scheibe 134, wodurch der Kolben 133 gegen seinen Sitz 132 gedrückt wird.

Der Ventilkörper 120 ist mit einem Austrittsdurchlass 124 versehen, der wie schematisch angegeben an die zum Kraftstoffbehälter 1 führende Rücklaufleitung 9 angeschlossen ist.

Der in dem Kopf des Ventils 100 befindliche Durchlass 131 ist durch seinen Eintritt 131a mit dem Volumen des Hochdruckspeichers 5 verbunden, und sein Austritt 131b kommuniziert durch die gelochte Scheibe 134 mit der Austrittsbohrung 124 des Ventils 100. Die Geometrie der verschiedenen das Ventil bildenden Teile ist so, dass bei Schließstellung des Sitzes 132 durch den Kolben 133, seine gelochte Scheibe 134 nicht gegen den Boden 136A des Hohlraumes 136 in dem Kopf 130 gedrückt wird, so dass die ganze von der tarierten Feder 123 ausgeübte Kraft den Kolben 133 beaufschlagt. Dadurch kann der Solldruck, bei dem sich das Ventil 100 öffnet, genau bestimmt werden.

Der Zusammenbau des Ventilkopfes 130 mit dem Ventilkörper 120 geschieht durch Verstemmung. Die Kammer 122 endet in einem aufgeweiteten Teil 125 und das zylindrische Ende 137 des Kopfes 130A, das mit dem Körper 120 zusammengebaut werden soll, trägt eine Verstemmkehle 137a. Der Zusammenbau erfolgt durch Verstemmung des vorderen Randes der Verlängerung 125 gegen den Kopf 130.

Die Fig. 3A, 3B zeigen eine erste Ausführungsform des Kolbens des erfindungsgemäßen Druckbegrenzungsventils 100. Dieser in der Fig. 2 die Bezugsnummer 133 tragende Kolben wird weiter unten - um seine detaillierten Beschreibung zu erleichtern - mit der Bezugsnummer 300 bezeichnet.

Der Kolben 300, der in den Fig. 3A und 3B in seiner definitiven Form in zwei verschiedenen Orientierungen um seine Achse xx dargestellt ist, besteht aus einem eine konische Fläche 311 aufweisenden Kopf 310, wobei die konische Fläche 311 mit dem in dem Kopf 130 des Druckbegrenzungsventils befindlichen Sitz 132 des Druckregelungsdurchlasses 131 zusammen wirken soll (Fig. 2). Der Kopf 310 geht in einen Körper 320 über, der die Form einer kreiszylindrischen Hülle aufweist. Er besteht aus einem Vorderteil 321, einem Zwischenteil 322 und einem Hinterteil 323. Der Vorderteil 321 ist kreiszylindrisch und hat den gleichen Querschnitt, wie der Hinterteil 323. Der Vorderteil 321 und der Hinterteil 323 wirken mit der für die Druckregelung verwendeten Durchlassbohrung 131 (Fig. 2) zusammen, um den Kolben 300 in seiner translatorischen Bewegung zwischen der offenen und der geschlossenen Stellung zu führen.

Der Zwischenteil 322 ist aus einer stumpfkegeligen vom Hinterteil 323 ausgehenden und über einen stumpfkegeligen umgekehrt geneigten Bund 322a in den Vorderteil 321 übergehenden Zone 322a gebildet.

Der Vorderteil 321 und der Zwischenteil sind mit drei gleichwinkelig um die Achse xx verteilten Abflachungen 324 versehen. Diese drei Abflachungen 324 bestehen aus ebenen, vorzugsweise zylindrischen Flächen, die die Zylinderfläche 321 und die stumpfkegeligen Flächen 322a und 322b schneiden. Es ergibt sich eine Abflachungskontur wie sie am besten in Fig. 3A sichtbar wird. Die Abflachungen 324 greifen auch auf den Übergang 330 zwischen dem Kolbenkopf 310 und dem global zylindrischen Kolbenkörper 320.

Fig. 3A zeigt eine bestimmte Drehorientierung des Kolbens um seine Achse xx zur Bildebene: eine der Abflachungen 324 steht senkrecht zur Bildebene, und eine der beiden anderen an der Kolbenvorderseite sichtbaren Abflachungen 324 besetzt eine um 120° abgesetzte Winkelstellung. Die andere - genau hinter der Ebene befindliche - besetzt die gleiche Winkelstellung.

Diese Abbildung zeigt ebenfalls punktiert den scheinbaren Umriss, den der Kolben 300 vor dem Schneiden der Abflachung 324 hatte.

Fig. 3B zeigt eine andere Orientierung des Kolbens um seine Achse xx, die der Ansicht des Kolbens von Fig. 3A von unten entspricht. Diese Ansicht macht zwei Abflachungen 324 sichtbar, wobei sich die dritte in der 120°-Stellung - d. h. fluchtrecht auf der Achse xx hinter der Bildebene - befindet. Dies entspricht natürlich einer Kolbenrotation um 90° gegenüber der Stellung von Fig. 3A.

Die globale Form der Hüllfläche des Kolbenkörper 320 begünstigt die Gleichmäßigkeit des Flusses, indem sie eine große Querschnittsfläche bietet, dank der, ohne die Kolbenherstellung aufwändiger zu machen, die Flüssigkeit gleichmäßig unter hohem Druck fließen kann. Die Form der in dieser Revolutionsfläche geschnittenen Abflachungen 324 gewährleistet eine gute Kontinuierlichkeit des Flusses.

Fig. 4 zeigt eine Seitenansicht einer zweiten Ausführungsform eines Kolbens 400 eines erfindungsgemäßen Druckbegrenzungsventils. Dieser Kolben 400 besteht aus einem Kopf 410 mit einer kegelstumpfförmigen Fläche 411, die mit dem Sitz 132 des Druckregelungsdurchlasses 131 des Ventils 100 zusammenwirkt. Der Kopf 410 geht über einen Übergang 430 in den Kolbenkörper 420 über. Der Körper 420 ist ab der Seite des Kopfes 412 in einen ersten kreiszylindrischen Teil 421, gefolgt von einem kegelstumpfförmiger Zwischenteil 422 und schließlich von einem kreiszylindrischer Hinterteil 423 unterteilt. Der Hinterteil 423 hat für die Führung des Kolbens 400 einen Querschnitt entsprechend demjenigen des Druckregelungsdurchlasses 131. Der kreiszylindrische Vorderteil 421 hat eine kleineren Querschnitt als die Durchlassbohrung 131, und der Zwischenteil 422 hat eine größere Basis, die dem Querschnitt des Hinterteils 423 entspricht, und eine kleinere Basis, die dem Querschnitt des zylindrische Vorderteils 421 entspricht.

So wird ein freier Abschnitt zwischen der Hülle des Kolbens 400 und der Druckregelungsdurchlassbohrung 131 realisiert, der gleichzeitig eine kontinuierliche in diesem Abschnitt die Gleichmäßigkeit des Durchflusses erleichternde Variation aufweist, und dabei einen genügend großen Querschnitt für eine ausgezeichnete Druckregelungsfunktion bietet, ohne die Kolbenherstellung aufwändiger zu machen. Vielmehr ist die rotationssymmetrische Form der Hülle mit einer ausgehend von der zylindrischen Fläche des Vorderteil 421 kontinuierlichen Änderung, die in die konische Fläche 422 übergeht, welche selbst von der zylindrischen Fläche 423 hinten gefolgt wird, eine sehr einfach zu realisierende und folglich wenig kostspielige Form.

### Als Zahlenbeispiel und zum Vergleich:

Größendaten des Kolbens 200 aus den Fig. 5A, 5B:
   Durchmesser: 2,5 mm,
   Länge: 5,5 mm
   Länge der Abflachung mit Kopf: 4,3 mm
   Kopfdurchmesser: 1,3 mm.
   Erfindungsgemäßer Kolben:
**Größendaten des Kolbens 300 (****Fig. 3A-B****):**
   Durchmesser: 1,5 mm,
   Länge: 5,2 mm
   Länge der Abflachung mit Kopf: 4,1 mm
   Kopfdurchmesser: 1,0 mm.
   Das erfindungsgemäße Druckbegrenzungsventil 100 ist auf Einspritzsysteme von Verbrennungsmotoren mit Hochdruckspeichern anwendbar.

## Patentansprüche

1. Druckbegrenzungsventil für einen Hochdruckspeicher eines Kraftstoffeinspritzungssystems eines Verbrennungsmotors, beinhaltend:
ein Gehäuse mit einem Druckregelungsdurchlass (131), versehen zwischen dem Ventileinlass (131A), der mit dem Hochdruckspeicher (5) verbunden ist, und dem Auslass (124) zum Kraftstoffbehälter (1) mit einem von einer tarierten Feder (123) beaufschlagten Kolben (133), wobei sich der Kolben (133) zum Kraftstoffbehälter (1) gegen die Federbeaufschlagung (223) öffnet, wenn der Druck im Speicher (5) den Solldruck übersteigt, auf den das Druckbegrenzungsventil eingestellt ist, **dadurch gekennzeichnet, dass**
- der Kolben (300, 400) aus einem eine konische Fläche (311,411) aufweisenden Kopf (310,410), einem kreiszylindrischen Vorderteil (321, 421), einem stumpfkegeligen Zwischenteil (322, 422) und einem kreiszylindrischen Hinterteil (323, 423) besteht,
- wobei der Kopf (310,410) in einen Körper (320,420) übergeht, der die Form einer kreiszylindrischen Hülle aufweist, welche aus dem Vorderteil (321,421), dem Zwischenteil (322,422) und dem Hinterteil (323,423) besteht,
- wobei die kleinere Basis des stumpfkegeligen Zwischenteils (322, 422) nach vorne gerichtet ist, und seine größere Basis in den Hinterteil (323,423) übergeht,
- wobei der Hinterteil (323,423) einen kreisförmigen dem Querschnitt des Druckregelungsdurchlasses (131) entsprechenden Querschnitt hat, und
- wobei die konische Fläche (311) des Kolbens mit dem im Kopf (130) des Druckbegrenzungsventils befindlichen Sitz (132) zusammen wirkt.

2. Druckbegrenzungsventil nach Anspruch 1, **dadurch gekennzeichnet, dass**
- der kreiszylindrische Vorderteil (321) den gleichen Querschnitt hat, wie der kreiszylindrische Hinterteil (323), und der stumpfkegelige Zwischenteil (322) sich an den Vorderteil durch seine kleinere mit einer Übergangszone (322a) verbundene Basis anschließt, wobei die Übergangszone umgekehrt-stumpfkegelig ist, und ihre kleinere Basis sich an die kleinere Basis des stumpfkegeligen Zwischenteils (322) anschließt, während sich die größere Basis an den kreiszylindrischen Vorderteil (321) anschließt,
- der Vorderteil (321) und der Zwischenteil (322) von zur Achse xx des Kolbens geneigten Ebenen geschnitten sind, wodurch im Wesentlichen dreieckige Abflachungen (324) gebildet werden, wobei die größere Basis der Abflachungen vorne und ihre [Spitze] hinten angeordnet sind.

3. Druckbegrenzungsventil nach Anspruch 1, **dadurch gekennzeichnet, dass** der kreiszylindrische Vorderteil (421) im Verhältnis zum Querschnitt der zur Druckregelung dienenden Durchtrittsbohrung (131) einen reduzierten Querschnitt hat und sich an die kleinere Basis des kegelstumpfförmigen Zwischenteils (422) anschließt.

4. Druckbegrenzungsventil nach Anspruch 1, **dadurch gekennzeichnet, dass** der Hohlraum (136), der die Trägerscheibe (134) aufnimmt, an die sich die tarierte Feder (123) abstützt, und die gegen den Kolben (300, 400) drückt, einen größeren Querschnitt aufweist, als die Aufnahme (122) der tarierten Feder (123).

5. Druckbegrenzungsventil nach Anspruch 1, **dadurch gekennzeichnet, dass** der Austritt (124) in die Kammer (122) bei der tarierten Feder (123) mündet.

6. Druckbegrenzungsventil nach Anspruch 2, **dadurch gekennzeichnet, dass** der Kolben (300) drei gleichwinklig um die Achse (xx) des Kolbens verteilte Abflachungen (324) ausweist.

7. Hochdruckspeicher eines Kraftstoffeinspritzsystems mit einem Druckbegrenzungsventil nach einem der Ansprüche 1 bis 5.

8. Kraftstoffhochdruckeinspritzsystem mit einem Speicher, der ein Druckbegrenzungsventil nach einem der Ansprüche 1 bis 6 aufweist.

## Claims

1. Pressure control valve for a high-pressure accumulator of a fuel injection system of an internal combustion engine, comprising:
a housing having a pressure regulation passage (131) provided between the valve inlet (131A), which is connected to the high-pressure accumulator (5), and the outlet (124) to the fuel tank (1), having a piston (133) which is acted on by a tared spring (123), wherein the piston (133) opens towards the fuel tank (1) counter to the spring loading (223) when the pressure in the accumulator (5) exceeds the setpoint pressure to which the pressure control valve is set, **characterized in that**
- the piston (300, 400) is composed of a head (310, 410) which has a conical surface (311, 411), of a circular cylindrical front part (321, 421), of a frustoconical intermediate part (322, 422) and of a circular cylindrical rear part (323, 423),
- wherein the head (310, 410) transitions into a body (320, 420) which has the shape of a circular cylindrical shell composed of the front part (321, 421), the intermediate part (322, 422) and the rear part (323, 423),
- wherein the relatively small base of the frustoconical intermediate part (322, 422) is directed forward and the relatively large base thereof transitions into the rear part (323, 423),
- wherein the rear part (323, 423) has a circular cross section corresponding to the cross section of the pressure regulation passage (131), and
- wherein the conical surface (311) of the piston interacts with the seat (132) situated in the head (130) of the pressure control valve.

2. Pressure control valve according to Claim 1, **characterized in that**
- the circular cylindrical front part (321) has the same cross section as the circular cylindrical rear part (323), and the frustoconical intermediate part (322) adjoins the front part by way of its relatively small base connected to a transition zone (322a), wherein the transition zone is of reversed frustoconical form and its relatively small base adjoins the relatively small base of the frustoconical intermediate part (322), while the relatively large base adjoins the circular cylindrical front part (321),
- the front part (321) and the intermediate part (322) are cut by planes inclined relative to the axis xx of the piston, whereby substantially triangular flattened portions (324) are formed, wherein the relatively large bases of the flattened portions are arranged at the front and the tips thereof are arranged at the rear.

3. Pressure control valve according to Claim 1, **characterized in that** the circular cylindrical front part (421) has a reduced cross section in relation to the cross section of the passage bore (131) that serves for pressure regulation, and said circular cylindrical front part adjoins the relatively small base of the frustoconical intermediate part (422).

4. Pressure control valve according to Claim 1, **characterized in that** the cavity (136) in which the carrier disk (134), on which the tared spring (123) is supported and which presses against the piston (300, 400), is received has a larger cross section than the receptacle (122) of the tared spring (123).

5. Pressure control valve according to Claim 1, **characterized in that** the outlet (124) issues into the chamber (122) at the tared spring (123).

6. Pressure control valve according to Claim 2, **characterized in that** the piston (300) has three flattened portions (324) distributed equiangularly about the axis (xx) of the piston.

7. High-pressure accumulator of a fuel injection system, having a pressure control valve according to one of Claims 1 to 5.

8. High-pressure fuel injection system having an accumulator which has a pressure control valve according to one of Claims 1 to 6.

## Revendications

1. Soupape de limitation de la pression pour un accumulateur haute pression d'un système d'injection de carburant d'un moteur à combustion interne, contenant :
un boîtier comprenant un passage de régulation de la pression (131), prévu entre l'entrée de soupape (131A), qui est connectée à l'accumulateur haute pression (5), et la sortie (124) vers le réservoir de carburant (1), avec un piston (133) sollicité par un ressort taré (123), le piston (133) s'ouvrant à l'encontre de la sollicitation du ressort (223) vers le réservoir de carburant (1) lorsque la pression dans l'accumulateur (5) dépasse la pression de consigne à laquelle la soupape de limitation de la pression est ajustée, **caractérisée en ce que**
- le piston (300, 400) se compose d'une tête (310, 410) présentant une surface conique (311, 411), d'une partie avant cylindrique circulaire (321, 421), d'une partie intermédiaire de forme tronconique (322, 422) et d'une partie arrière cylindrique circulaire (323, 423),
- la tête (310, 410) se prolongeant par un corps (320, 420) qui présente la forme d'une douille cylindrique circulaire qui se compose de la partie avant (321, 421), de la partie intermédiaire (322, 422) et de la partie arrière (323, 423),
- la base plus petite de la partie intermédiaire de forme tronconique (322, 422) étant orientée vers l'avant et sa base plus grande se prolongeant par la partie arrière (323, 423),
- la partie arrière (323, 423) ayant une section transversale circulaire correspondant à la section transversale du passage de régulation de la pression (131), et
- la surface conique (311) du piston coopérant avec le siège (132) se trouvant dans la tête (130) de la soupape de limitation de la pression.

2. Soupape de limitation de la pression selon la revendication 1, **caractérisée en ce que**
- la partie avant cylindrique circulaire (321) a la même section transversale que la partie arrière cylindrique circulaire (323), et la partie intermédiaire de forme tronconique (322) se raccorde à la partie avant par sa base plus petite connectée à une zone de transition (322a), la zone de transition étant inversement tronconique, et sa base plus petite se raccordant à la base plus petite de la partie intermédiaire de forme tronconique (322) tandis que la base plus grande se raccorde à la partie avant cylindrique circulaire (321),
- la partie avant (321) et la partie intermédiaire (322) étant coupées par des plans inclinés par rapport à l'axe xx du piston, de sorte que des méplats essentiellement triangulaires (324) soient formés, la base plus grande des méplats étant disposée à l'avant et leur pointe étant disposée à l'arrière.

3. Soupape de limitation de la pression selon la revendication 1, **caractérisée en ce que** la partie avant cylindrique circulaire (421), par rapport à la section transversale de l'alésage de passage (131) servant à la régulation de la pression, présente une section transversale réduite et se raccorde à la base plus petite de la partie intermédiaire de forme tronconique (422).

4. Soupape de limitation de la pression selon la revendication 1, **caractérisée en ce que** la cavité (136) qui reçoit le disque de support (134) sur lequel s'appuie le ressort taré (123), et qui presse contre le piston (300, 400), présente une section transversale supérieure au logement (122) du ressort taré (123).

5. Soupape de limitation de la pression selon la revendication 1, **caractérisée en ce que** la sortie (124) débouche dans la chambre (122) au niveau du ressort taré (123).

6. Soupape de limitation de la pression selon la revendication 2, **caractérisée en ce que** le piston (300) présente trois méplats (324) répartis de manière angulaire uniformément autour de l'axe (xx) du piston.

7. Accumulateur haute pression d'un système d'injection de carburant comprenant une soupape de limitation de la pression selon l'une quelconque des revendications 1 à 5.

8. Système d'injection de carburant haute pression comprenant un accumulateur qui présente une soupape de limitation de la pression selon l'une quelconque des revendications 1 à 6.
